# EUROPEAN PATENT SPECIFICATION

(11) **EP 3 015 257 B1**
(45) Date of publication and mention of the grant of the patent: **01.05.2019**
(21) Application number: 15191642.6
(22) Date of filing: 27.10.2015
(51) Int. Cl.: B29D 15/00, B29C 70/46, B29C 70/54, F16H 55/06, B29L 15/00, B29K 101/12, B29K 105/00, B29K 307/04, B29K 105/08

(54) **GEAR AND MANUFACTURING METHOD THEREOF**
ZAHNRAD UND HERSTELLUNGSVERFAHREN DAFÜR
ROUE DENTÉE ET PROCÉDÉ DE FABRICATION DE CELUI-CI

(30) Priority: 28.10.2014 JP 2014219465
(43) Date of publication of application: 04.05.2016
(73) Proprietor: JTEKT CORPORATION, Osaka-shi, Osaka 542-8502 (JP)
(72) Inventor: KUNISHIMA, Takeshi, Osaka-shi, Osaka 542-8502 (JP)
(74) Representative: Winter, Brandl, Fürniss, Hübner, Röss, Kaiser, Polte - Partnerschaft mbB

(56) References cited:
- DE-B- 1 189 329
- GB-A- 1 485 586
- JP-A- 2001 304 379
- US-A- 5 098 346

## Description

### BACKGROUND OF THE INVENTION

### 1. Field of the Invention

The present invention relates to gears and manufacturing methods thereof.

### 2. Description of the Related Art

For example, in electric power steering systems, rotation of an electric motor for steering assist is reduced in speed and amplified in output via a speed reducer and is then transmitted to a steering operation mechanism, thereby assisting operation of the steering operation mechanism which is caused by operation of the driver. The speed reducer usually includes a metal worm as a pinion and a resin worm wheel as a wheel which mesh with each other. For example, the worm wheel is manufactured by forming an annular resin member around a metal core (sleeve) by injection molding (insert molding) etc. and then forming teeth in the outer periphery of the resin member by cutting etc. For example, the resin member is made of a resin such as polyamide (PA6, PA66, PA46, etc.) and polyphenylene sulfide (PPS).

Reduction in weight of automotive parts is desired in response to the recent need for reduced environmental load. Speed reducers of electric power steering systems are no exception to this. A sleeve of the worm wheel is made of a metal, and the ratio of the weight of the sleeve to the overall weight of the electric power steering system is high. It is therefore necessary to use a lighter material while maintaining required strength and rigidity. In recent years, automotive parts using fiber reinforced composites that are lightweight, strong, and rigid have been proposed. For example, Japanese Patent Application Publication No. 2001-304379 (JP 2001-304379 A) discloses a gear including a body portion (sleeve) and a tooth portion. The sleeve is made of a resin containing reinforcing fibers such as metal fibers, carbon fibers, and glass fibers. The tooth portion is made of a resin containing no reinforcing fibers. The body portion has a tooth core portion extending in teeth of the tooth portion. The gear of JP 2001-304379 A is manufactured by injection molding a synthetic resin material containing reinforcing fibers, placing the resultant molding (body portion) in a mold, and injecting a synthetic resin material containing no reinforcing fibers to form the tooth portion.

In JP 2001-304379 A, however, the body portion and the tooth portion are bonded together as the synthetic resin material is injected around the body portion. The boundary surface (bonded portion) therebetween therefore does not have sufficient reliability and shock resistance. In order to improve the reliability and the shock resistance, the outer periphery surface of the body portion may be subjected to knurling, blasting, etching, etc. so that the tooth portion does not come off from the body portion or rotate relative to the body portion. However, knurling, blasting, etching, etc. cut the reinforcing fibers in the body portion, which may serve as fracture origins. This reduces mechanical strength and rigidity of the body portion.

In addition to the disclosure of JP 2001-304379 A, the following examples are possible as methods using fiber reinforced composites. However, problems similar to those of JP 2001-304379 A may occur in these examples.
(1) A carbon fiber prepreg (a carbon fiber sheet tape impregnated with a thermosetting resin) is formed into an annular shape by sheet winding, and the outer periphery thereof is cut to form teeth. However, when forming the teeth by cutting, carbon fibers are cut, which reduces mechanical strength and rigidity of a gear. Since the carbon fibers are contained up to the tip ends of the teeth, the teeth are rigid and less tough (flexible). Accordingly, rattling noise tends to be generated.
(2) Only the sleeve is made of a carbon fiber reinforced plastic (CFRP) formed by the sheet winding, and the resin tooth portion prepared separately is bonded to the sleeve.
(3) Only the sleeve is made of CFRP formed by the sheet winding. The sleeve is placed in a mold of an injection molding machine, and a resin for the tooth portion is injected.

In the methods (2) and (3), the tooth portion need not contain carbon fibers. Accordingly, toughness and shock resistance of the tooth portion may be maintained. However, problems similar to those of JP 2001-304379 A occur in the methods (2) and (3). That is, the boundary surface (bonded portion) between the sleeve and the tooth portion does not have sufficient reliability and shock resistance. If knurling etc. is performed in order to improve the reliability and the shock resistance, the reinforcing fibers in the sleeve are cut, which reduces mechanical strength and rigidity of the sleeve.

All of the methods (1) to (3) use thermosetting CFRP. However, it takes five hours or more including the time to fluidize the resin until a curing reaction is completed. This is longer than the cycle time (C/T) of common automotive parts, thereby increasing manufacturing cost. It is also possible to use a carbon fiber reinforced thermo-plastic (CFRTP) using a thermoplastic resin that can be molded in a shorter time than a thermosetting resin. However, a CFRTP prepreg is hard and is not tacky. It is therefore difficult to form the prepreg into an annular shape by the sheet winding.

From document DE 11 89 329 B a fiber reinforced gear made of plastic material is known. The plastic material is brought into a cylindrical shape to form a sleeve portion. The manufacturing method includes heating and pressing the thermoplastic material and forming teeth in an outer periphery of the tooth portion. From document GB 1 485 586 A composite materials and in particular a method of manufacturing composite materials which comprise reinforcing filaments enclosed in a matrix of thermoplastic resin are known. The manufacturing method comprises compressing and hearing a structure of layer or layers of filaments and layers of resin sheets.

### SUMMARY OF THE INVENTION

It is one object of the present invention to provide a manufacturing method of a gear which can maintain high toughness and high shock resistance of a tooth portion and at the same time improve mechanical strength and rigidity of a sleeve portion, and which can manufacture in a short cycle time a gear in which the sleeve portion and the tooth portion are present as a continuous layer, and to provide a gear produced by this method.

The present invention provides a manufacturing method of a gear according to the features of claim 1 and an annular gear according to the features of claim 7.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic perspective view of a gear according to an embodiment of the present invention;
FIG. 2 is a diagram illustrating a part of a manufacturing process of the gear and showing the step of winding sheets around a core;
FIGS. 3A and 3B are diagrams showing a step associated with the winding of the sheets, where FIG. 3A shows an example in which the sheets are wound concentrically, and FIG. 3B shows an example in which the sheets are wound spirally;
FIGS. 4A, 4B, and 4C are diagrams showing the relationship between the direction in which fibers of a reinforcing fiber sheet out of the sheets are oriented and the winding direction of the reinforcing fiber sheet;
FIG. 5 is a diagram showing the core after winding of the sheets is completed;
FIGS. 6A and 6B are diagrams showing the step of heating and pressing a cylindrical structure using the sheets, where FIG. 6A shows an example of normal press work, and FIG. 6B shows an example of slide core press work;
FIG. 7 is a diagram showing the step of removing the core from the cylindrical structure after the press work shown in FIGS. 6A and 6B;
FIG. 8 is a diagram showing the step of dividing the cylindrical structure shown in FIG. 7 into individual annular structures of a gear size;
FIGS. 9A and 9B are diagrams showing the step of heating and pressing the cylindrical structure using the sheets, where FIG. 9A shows an example of normal press work and FIG. 9B shows an example of slide core press work;
FIG. 10 is a diagram showing the step of removing the core from the cylindrical structure after the press work shown in FIGS. 9A and 9B;
FIG. 11 is a diagram showing the step of dividing the cylindrical structure shown in FIG. 10 into individual annular structures of a gear size; and
FIG. 12 is a diagram showing the step of cutting each of the annular structures in FIG. 11 to form teeth.

### DETAILED DESCRIPTION OF EMBODIMENTS

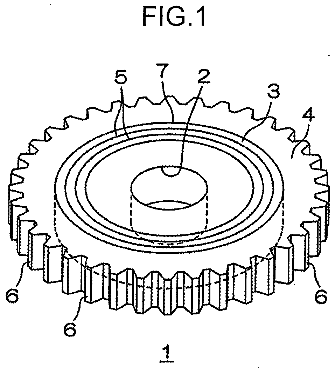

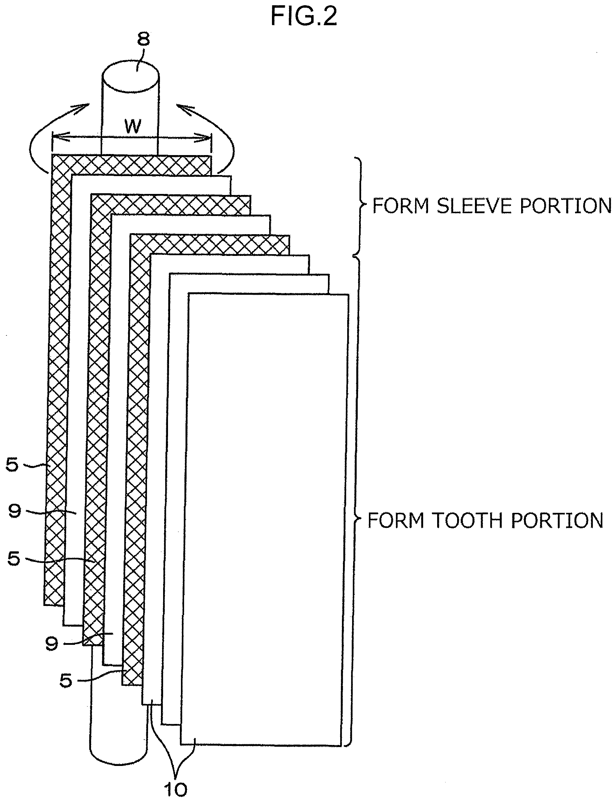

FIG. 1 is a schematic perspective view of a gear 1 according to an embodiment of the present invention. The gear 1 has an annular shape with a through hole 2 in the center. A shaft (e.g., a lower shaft of a power steering mechanism etc.), not shown, is inserted through the through hole 2. The gear 1 is a single-piece resin molding, and includes a sleeve portion 3 and a tooth portion 4 concentrically from the through hole 2. The sleeve portion 3 and the tooth portion 4 are formed as a continuous resin layer. In the present embodiment, the sleeve portion 3 and the tooth portion 4 are distinguished from each other based on whether a reinforcing fiber sheet 5 is contained in the resin layer. The sleeve portion 3 is defined as an annular region containing the reinforcing fiber sheet 5. The tooth portion 4 is a region surrounding the sleeve portion 3, and is defined as an annular region containing no reinforcing fiber sheet 5. The tooth portion 4 has a plurality of teeth 6 formed in its outer periphery in the circumferential direction. As used herein, the configuration in which two regions (in the present embodiment, the sleeve portion 3 and the tooth portion 4) form a continuous layer means that there is no physical boundary surface between the two regions. For example, a boundary such as a grain boundary of a material phase due to the difference in resin material may be present between the sleeve portion 3 and the tooth portion 4. For example, a physical boundary surface sometimes appears between the sleeve portion and the tooth portion if the tooth portion is separately injection molded on the outer periphery of the sleeve portion made of a metal or resin. In FIG. 1, an imaginary boundary 7 is shown between the sleeve portion 3 and the tooth portion 4 for clarity (the same applies to FIG. 2 and the subsequent figures).

The reinforcing fiber sheet 5 is stacked in the sleeve portion 3 such that one surface and the other surface of the reinforcing fiber sheet 5 extend in the circumferential direction of the through hole 2 and such that a plurality of reinforcing fiber sheets 5 is wound concentrically, or a single reinforcing fiber sheet 5 is wound spirally. For example, various fibers such as carbon fibers, glass fibers, and aramid fibers can be used as the fibers for the reinforcing fiber sheet 5. In particular, carbon fibers are preferable in order to make the sleeve portion 3 of the gear 1 as strong and rigid as possible. Carbon fibers having tensile strength of 3,000 MPa or more and a tensile modulus of elasticity of 200 GPa or more are preferable in order to further enhance these effects of carbon fibers.

The reinforcing fiber sheet 5 may be a cloth material woven such that reinforcing fibers of the warp and the weft are oriented alternately, or may be a unidirectional (UD) material in which reinforcing fibers are oriented in one direction. The cloth material may be woven by commonly known methods such as plain weave, twill, sateen weave, leno weave, mock leno weave, and twill weave. However, the present invention is not limited to this as long as the cloth material can be impregnated with a resin.

The gear 1 may contain an additive such as a filler. Adding the filler can further improve toughness, strength, wear resistance, shock resistance, etc. of the tooth portion 4 while particularly maintaining satisfactory flexibility of the tooth portion 4 containing no reinforcing fibers. Moreover, adding the filler can further improve strength and rigidity of the sleeve portion 3 and thus overall strength and rigidity of the gear 1 as the filler is introduced between the reinforcing fiber sheets 5.

Examples of the filler include one or more of a short fiber-like filler such as glass fibers and carbon fibers, a plate-like filler such as glass flakes, and a filler capable of finely reinforcing carbon nanotubes, carbon nanofibers, etc. A manufacturing method of the gear 1 will be described in detail below with reference to FIGS. 2 to 8. In order to manufacture the gear 1, a core 8, and the reinforcing fiber sheet 5, a first thermoplastic resin sheet 9, and a second thermoplastic resin sheet 10 which are to be wound around the core 8 are first prepared as shown in FIG. 2. For example, the core 8 may be a commonly used metal core such as a mandrel. A dry reinforcing fiber sheet, which is different from a reinforcing fiber sheet impregnated with a resin in advance such as a prepreg, is used as the reinforcing fiber sheet 5. In the case of manufacturing the gear 1 containing the filler, it is preferable to prepare the first and second thermoplastic resin sheets 9, 10 containing the filler. In particular, it is preferable that the second thermoplastic resin sheet 10 contain the filler in order to improve toughness etc. of the tooth portion 4.

Examples of raw resins for the first and second thermoplastic resin sheets 9, 10 include aliphatic polyamides (PA6, PA66, PA12, PA612, PA610, PA11, etc.), aromatic polyamides (PA6T, PT9T, PPA), engineering plastics, and super engineering plastics. Examples of the engineering plastics include polyacetal and polycarbonate. Examples of the super engineering plastics include fluororesin, polyether ether ketone (PEEK) and polyphenylene sulfide (PPS).

The raw resins of the first and second thermoplastic resin sheets 9, 10 can be selected from the above resins and various thermoplastic resins that can be formed into a sheet. However, it is preferable that the number average molecular weight of the second thermoplastic resin sheet 10 be larger than that of the first thermoplastic resin sheet 9. This can make it easy to impregnate the fibers of the reinforcing fiber sheet 5 with the resin having a relatively small number average molecular weight in the sleeve portion 3, and can improve the strength, wear resistance, etc. of the tooth portion 4 by the resin having a relatively large number average molecular weight in the tooth portion 4.

More specifically, it is preferable that the first thermoplastic resin sheet 9 be made of a resin having a number average molecular weight of 25,000 or less and the second thermoplastic resin sheet 10 be made of a resin having a number average molecular weight of more than 25,000. In view of affinity, the first and second thermoplastic resin sheets 9, 10 are preferably made of resins of the same type. Specifically, the first and second thermoplastic resin sheets 9, 10 are made of PA resins, and more preferably PA66 resins.

In view of the ease of winding the sheets around the core 8, the reinforcing fiber sheet 5 preferably has a thickness of, e.g., 0.05 mm to 0.35 mm, the first thermoplastic resin sheet 9 preferably has a thickness of, e.g., 0.01 mm to 0.3 mm, and the second thermoplastic resin sheet 10 preferably has a thickness of, e.g., 0.01 mm to 0.3 mm. In order to ensure satisfactory adhesion with a resin, it is preferable that the surface of the reinforcing fiber sheet 5 be treated in advance with various sizing agents such as a urethane sizing agent, an epoxy sizing agent, an acrylic sizing agent, and a bismaleimide sizing agent. It is preferable that the peripheral surface of the core 8 be subjected to a mold release treatment in advance so that the core 8 can be easily removed from the through hole 2 of the sleeve portion 3 in a core removing step to be performed later.

First, a plurality of the reinforcing fiber sheets 5 and a plurality of the first thermoplastic resin sheets 9 are wound around the core 8 until the stack has a predetermined thickness (e.g., 5 mm to 25 mm). The sheet that contacts the core 8 may be either the reinforcing fiber sheet 5 or the first thermoplastic resin sheet 9. The reinforcing fiber sheets 5 and the first thermoplastic resin sheets 9 may be alternately wound one by one, or may be wound so that two or more reinforcing fiber sheets 5 are successively stacked on each other and two or more first thermoplastic resin sheets 9 are successively stacked on each other. For example, the number of reinforcing fiber sheets 5, the number of first thermoplastic resin sheets 9, and the thickness of the stack can be set based on the filling amount (Vf) of the reinforcing fiber sheets 5 in a cylindrical structure (sleeve portion 3) formed by stacking the reinforcing fiber sheets 5 and the first thermoplastic resin sheets 9. For example, it is preferable that the filling amount (Vf) of the reinforcing fiber sheets 5 be 35 to 70%. If the filling amount (Vf) is in this range, the fibers of the reinforcing fiber sheets 5 can be uniformly impregnated with the resin, and the strength and rigidity which are required for speed reducers can be ensured.

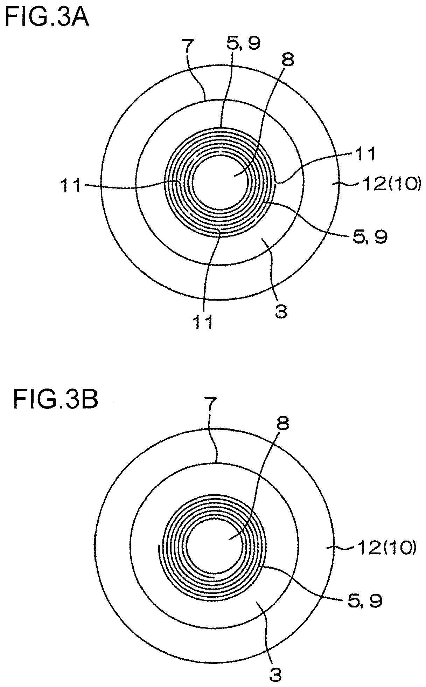

Examples of how to wind the reinforcing fiber sheets 5 and the first thermoplastic resin sheets 9 around the core 8 are shown in FIGS. 3A and 3B. In FIG. 3A, the reinforcing fiber sheets 5 and the first thermoplastic resin sheets 9, each having substantially the same width W (see FIG. 2) as the circumference of the core 8, are wound one by one concentrically in the circumferential direction of the core 8. In this case, it is preferable that joint lines 11 of the sheets 5, 9 be shifted from each other in the circumferential direction of the core 8, as shown in FIG. 3A. This can suppress distortion of the shape of the cylindrical sleeve portion 3 formed by the sheets 5, 9.

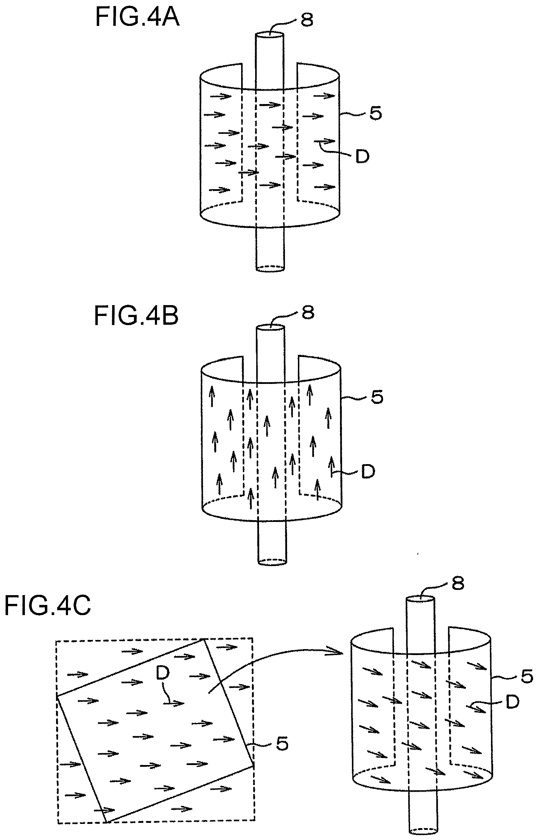

In FIG. 3B, the reinforcing fiber sheet 5 and the first thermoplastic resin sheet 9 are wound spirally. In this case, the sheets 5, 9 are first placed on top of each other (which is not a prepreg) and then simultaneously wound around the core 8 so that the sheets 5, 9 are alternately stacked on the core 8. As shown in FIGS. 4A, 4B, and 4C, it is preferable to decide the orientation direction D, namely the direction in which fibers of the reinforcing fiber sheet 5 are oriented with respect to the winding direction of the reinforcing fiber sheet 5 (the circumferential direction of the core 8, or the circumferential direction of the through hole 2 in a final product), in view of load characteristics (tensile load, compressive load, bending load, torsional load, etc.) required for the sleeve portion 3. For example, as shown in FIG. 4A, the orientation direction D of the fibers may be parallel to the circumferential direction of the core 8. As shown in FIG. 4B, the orientation direction D of the fibers may be perpendicular to the circumferential direction of the core 8. Furthermore, as shown in FIG. 4C, a sheet 5 obtained by cutting out a part of the prepared reinforcing fiber sheet 5 as appropriate may be wound around the core 8 so that the orientation direction D of the fibers obliquely crosses the circumferential direction of the core 8. FIGS. 4A, 4B, and 4C merely show examples of the relationship between the orientation direction D of the fibers and the winding direction of the reinforcing fiber sheet 5. The manufacturer can adjust the orientation direction D of the fibers as appropriate.

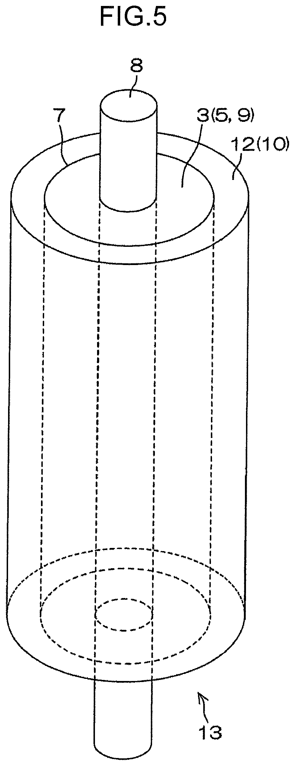

After the reinforcing fiber sheet 5 and the first thermoplastic resin sheet 9 are wound around the core 8, only the second thermoplastic resin sheet 10 is wound therearound. The second thermoplastic resin sheet 10 can be wound by the methods shown in FIGS. 3A and 3B. Winding of the sheets 5, 9, and 10 is completed when the stack of the second thermoplastic resin sheet 10 has a predetermined thickness (e.g., 5 mm to 20 mm). As shown in FIG. 5, a cylindrical structure 13 (resin pipe) including the sleeve portion 3 and a tooth formation portion 12 is produced by the above process.

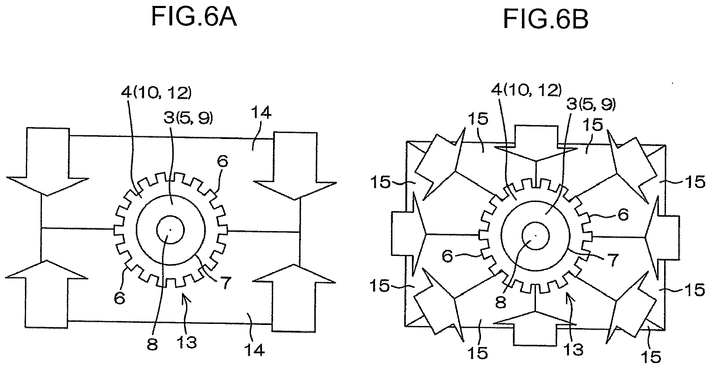

Next, as shown in FIGS. 6A and 6B, the cylindrical structure 13 having the core 8 therein is placed in press molds 14, 15 and is pressed while being heated until the first and second thermoplastic resin sheets 9, 10 melt. The stacked resin sheets of the first and second thermoplastic resin sheets 9, 10 are thus fluidized and melt together, whereby the stacked resin sheets of the first and second thermoplastic resin sheets 9, 10 are formed into the annular sleeve portion 3 and the tooth formation portion 12, respectively. In the sleeve portion 3, the fibers of the reinforcing fiber sheet 5 are impregnated with the resin. Near the boundary between the sleeve portion 3 and the tooth formation portion 12, the fluidized first and second thermoplastic resin sheets 9, 10 melt together, whereby the sleeve portion 3 and the tooth formation portion 12 are combined into a single piece.

The melt flow rate (MFR) of the resin at the melting temperature is, e.g., 10 g/10 min or more (preferably 30 g/10 min or more). If the melt flow rate is in this range, the fibers of the reinforcing fiber sheet 5 can be satisfactorily impregnated with the resin. In order to adjust the melt flow rate to the above range, a viscosity reducing agent, a dispersant, an amorphous resin for reducing the solidification rate, etc. may be added to the resin as appropriate.

In order to produce a cylindrical molding with less distortion, it is preferable to use slide core split molds 15 (see FIG. 6B) rather than normal upper and lower press molds 14 (see FIG. 6A) as the press molds. The peripheral surface of the cylindrical structure 13 can thus be uniformly pressed. The molds 14, 15 having a tooth form with a pattern corresponding to the teeth 6 are used as shown in FIGS. 6A and 6B. The teeth 6 can thus be formed at the same time the sleeve portion 3 and the tooth formation portion 12 are combined into a single piece. That is, the tooth portion 4 including the teeth 6 can be formed at the same time.

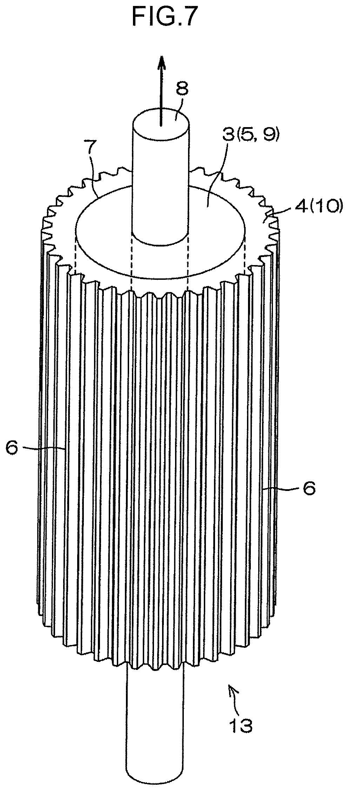

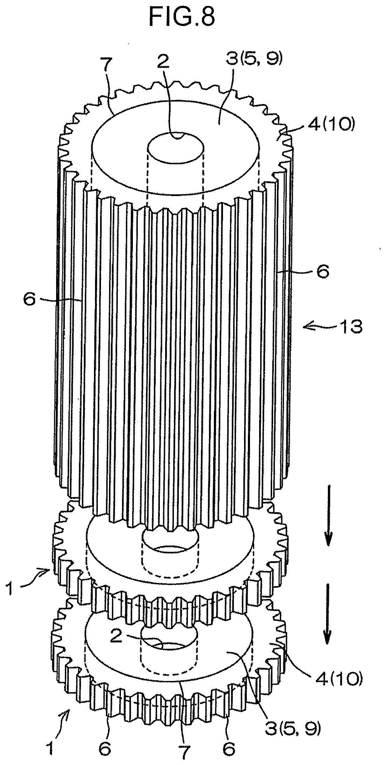

For example, after the cylindrical structure 13 is left in the heated and pressed state for about 1 to 15 minutes, the molds 14, 15 are cooled. Thereafter, as shown in FIG. 7, the cylindrical structure 13 with the teeth 6 is removed from the molds 14, 15, and the core 8 is removed from the cylindrical structure 13. Finally, as shown in FIG. 8, the cylindrical structure 13 is cut into individual gears 1. The gear 1 shown in FIG. 1 is thus produced. Accuracy of the inside diameter of the through hole 2 of the gear 1 thus produced is determined by accuracy of the outside diameter of the core 8. Accordingly, accuracy of press fitting of the shaft in the through hole 2 can be improved by increasing the accuracy of the outside diameter of the core 8. Alternatively, the inner periphery of the through hole 2 may be cut to predetermined accuracy after the cylindrical structure 13 is cut into the individual gears 1.

According to the above method, the first and second thermoplastic resin sheets 9, 10 melt together in the heating and pressing step shown in FIGS. 6A and 6B. As a result, the sleeve portion 3 and the tooth formation portion 12 (tooth portion 4) are combined into a single piece to form a continuous layer. This eliminates the need to perform knurling etc. on the sleeve portion 3, and the surface (peripheral surface) of the sleeve portion 3 is not damaged. Accordingly, continuous fibers of the reinforcing fiber sheet 5 are not cut or are cut only slightly, and the original shape of the reinforcing fiber sheet 5 is maintained. Mechanical strength and rigidity of the sleeve portion 3 can therefore be improved by the reinforcing fiber sheet 5. Moreover, no reinforcing fiber sheet 5 is required in the tooth formation portion 12 (tooth portion 4) in the process in which the sleeve portion 3 and the tooth formation portion 12 (tooth portion 4) are combined into a single piece. Accordingly, high toughness and high shock resistance of the tooth portion 4 can be maintained as well as the mechanical strength and rigidity of the sleeve portion 3 can be improved.

Thermoplastic resins are used for both the sleeve portion 3 and the tooth portion 4. Unlike thermosetting resins that require a chemical reaction for curing, the thermoplastic resins can be cured by merely cooling the softened resins (e.g., for 0.5 to 5 minutes). The gear 1 can therefore be manufactured in a short cycle time. Moreover, in the sleeve portion 3, the fibers of the reinforcing fiber sheet 5 can be impregnated with the molten thermoplastic resin in the heating and pressing step. Accordingly, a thermoplastic resin prepreg need not be used as a material of the sleeve portion 3. This can prevent reduction in productivity due to low tackiness and low flexibility which are specific to thermoplastic resin prepregs.

As described above, in the gear 1 of FIG. 1 produced by the above process, the sleeve portion 3 and the tooth portion 4 are firmly combined into a single piece by a continuous resin layer. The gear 1 is therefore lightweight. The sleeve portion 3 contains the reinforcing fiber sheet 5 and is therefore strong and rigid. The tooth portion 4 is made of the resin that does not contain the reinforcing fiber sheet 5. The tooth portion 4 is therefore flexible and tough, and is less likely to generate rattling noise etc. and has high shock resistance. Accordingly, using the gear 1 as, e.g., a worm wheel in a speed reducer of an electric power steering system can significantly reduce the weight of the speed reducer and the weight of the electric power steering system. For example, the weight can be reduced by about 50% as compared to the case of using a worm wheel including a metal sleeve portion.

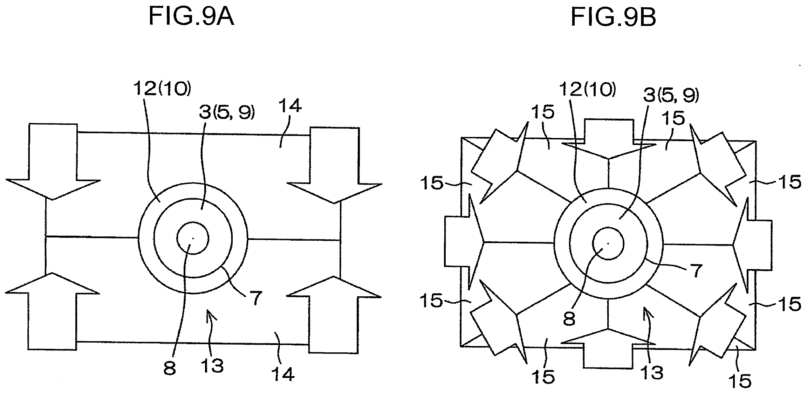

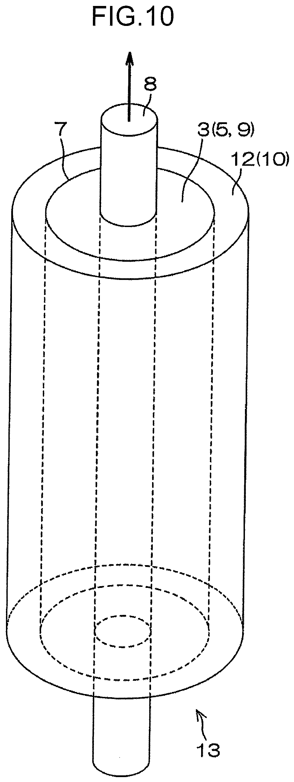

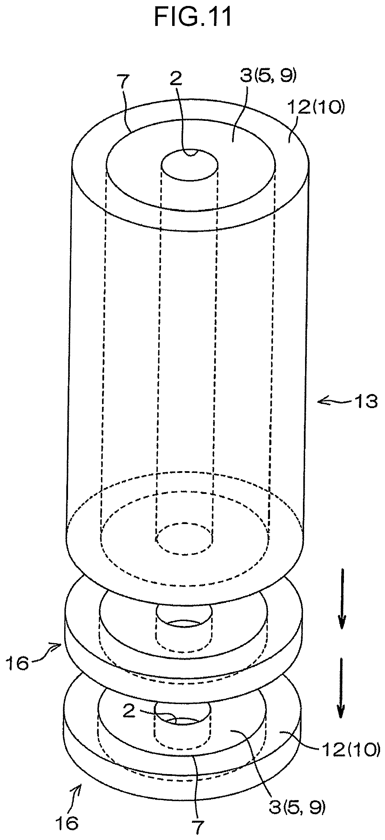

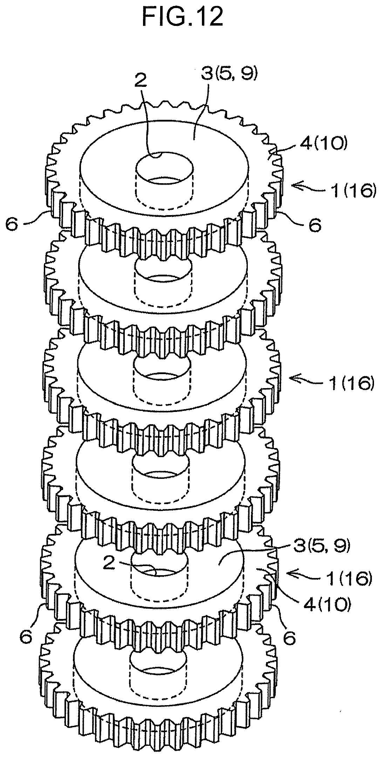

The present invention is not limited to the above embodiment, and may be carried out in other embodiments. For example, as shown in FIGS. 9A and 9B, the molds 14, 15 may not have the tooth form in the step of heating and pressing the cylindrical structure 13. In this case, the cylindrical structure 13 having a smooth peripheral surface is removed from the molds (see FIG. 10), and is cut into individual semi-finished products 16 (annular structures) of the gears 1 (see FIG. 11). Thereafter, the outer periphery of each semi-finished product 16 is cut with a hob cutter etc. to form the teeth 6, as shown in FIG. 12.

For example, the first and second thermoplastic resin sheets 9, 10 may be made of exactly the same resin.

## Claims

1. A manufacturing method of a gear, comprising the steps of:
(a) stacking a dry reinforcing fiber sheet (5) and a first thermoplastic resin sheet (9) into a cylindrical shape to form a sleeve portion (3);
(b) stacking a second thermoplastic resin sheet (10) around an outer periphery of the sleeve portion (3) to form a tooth formation portion (12);
(c) heating and pressing the sleeve portion (3) and the tooth formation portion (12); and
(d) forming teeth (6) in an outer periphery of the tooth formation portion (12) to form a tooth portion (4), whereby the tooth portion (4) is defined as an annular region containing no reinforcing fiber sheet (5).

2. The manufacturing method according to claim 1, wherein
step (d) is performed simultaneously with step (c) by using a tooth form in step (c).

3. The manufacturing method according to claim 1, wherein
step (d) includes cutting the tooth formation portion (12) after step (c) to form the teeth (6).

4. The manufacturing method according to any one of claims 1 to 3, wherein
the first thermoplastic resin sheet (9) contains a resin having a number average molecular weight of 25,000 or less, and
the second thermoplastic resin sheet (10) contains a resin having a number average molecular weight of more than 25,000.

5. The manufacturing method according to any one of claims 1 to 4, wherein
the second thermoplastic resin sheet (10) includes a sheet containing a filler.

6. The manufacturing method according to any one of claims 1 to 5, further comprising the step of:
(e) dividing a cylindrical structure produced by step (c) into individual pieces of a size corresponding to an individual gear.

7. An annular gear having a through hole in its center, comprising:
a sleeve portion (3) that is made of a first thermoplastic resin (9) and that contains a reinforcing fiber sheet (5) stacked such that one surface and the other surface of the reinforcing fiber sheet (5) extend in a circumferential direction of the through hole (2) and such that a plurality of reinforcing fiber sheets (5) is wound concentrically, or a single reinforcing fiber sheet (5) is wound spirally; and
a tooth portion (4) that is made of a second thermoplastic resin (10), is a region surrounding the sleeve portion (3) and is defined as an annular region containing no reinforcing fiber sheet (5), whereby the tooth portion together with the sleeve portion (3) forms a continuous resin layer, and that has teeth (6) formed in its outer periphery.

## Patentansprüche

1. Herstellungsverfahren eines Zahnrads mit:
(a) Stapeln einer trocknen Verstärkungsfaserfolie (5) und einer ersten thermoplastischen Harzfolie (9) in eine zylindrische Form, um einen Hülsenabschnitt (3) auszubilden;
(b) Stapeln einer zweiten thermoplastischen Harzfolie (10) um einen Außenumfang des Hülsenabschnitts (3), um einen Zahnbildungsabschnitt (12) auszubilden;
(c) Erwärmen und Pressen des Hülsenabschnitts (3) und des Zahnbildungsabschnitts (12); und
(d) Bilden der Zähne (6) in einem Außenumfang des Zahnbildungsabschnitts (12), um einen Zahnabschnitt (4) auszubilden, wobei der Zahnabschnitt (4) als ein ringförmiger Bereich ohne Verstärkungsfaserfolie (5) definiert ist.

2. Herstellungsverfahren nach Anspruch 1, wobei
Schritt (d) gleichzeitig mit Schritt (c) unter Verwendung einer Zahnform in Schritt (c) durchgeführt ist.

3. Herstellungsverfahren nach Anspruch 1, wobei
Schritt (d) Schneiden des Zahnbildungsabschnitts (12) nach Schritt (c) aufweist, um die Zähne (6) auszubilden.

4. Herstellungsverfahren nach einem der Ansprüche 1 bis 3, wobei
die erste thermoplastische Harzfolie (9) ein Harz mit einem zahlendurchschnittlichen Molekulargewicht von 25,000 oder weniger aufweist, und
die zweite thermoplastische Harzfolie (10) ein Harz mit einem zahlendurchschnittlichen Molekulargewicht von mehr als 25,000 aufweist.

5. Herstellungsverfahren nach einem der Ansprüche 1 bis 4, wobei
die zweite thermoplastische Harzfolie (10) eine einen Füllstoff enthaltende Folie aufweist.

6. Herstellungsverfahren nach einem der Ansprüche 1 bis 5, ferner mit dem Schritt:
(e) des Aufteilens einer durch Schritt (c) erzeugten zylindrischen Struktur in einzelne Stücke von einer Größe entsprechend einem einzelnen Zahnrad.

7. Ringförmiges Zahnrad mit einem Durchgangsloch in seiner Mitte mit:
einem Hülsenabschnitt (3), der aus einem ersten thermoplastischen Harz (9) ausgebildet ist und der eine Verstärkungsfaserfolie (5) aufweist, die so gestapelt ist, dass sich eine Oberfläche und die andere Oberfläche der Verstärkungsfaserfolie (5) in einer Umfangsrichtung des Durchgangslochs erstrecken, und dass eine Vielzahl von Verstärkungsfaserfolien (5) zentrisch aufgewickelt ist oder eine einzelne Verstärkungsfaserfolie (5) spiralförmig aufgewickelt ist; und
einem Zahnabschnitt (4), der aus einem zweiten thermoplastischen Harz (10) ausgebildet ist, der ein Bereich ist, welcher den Hülsenabschnitt (3) umgibt und als ein ringförmiger Bereich ohne Verstärkungsfaserfolie (5) definiert ist, wodurch der Zahnabschnitt (4) zusammen mit dem Hülsenabschnitt (3) eine kontinuierliche Harzschicht ausbildet, und der an seinem Außenumfang gebildete Zähne (6) hat.

## Revendications

1. Procédé de fabrication d'un roulement, comprenant les étapes de :
(a) empilement d'une feuille de fibres de renforcement sèches (5) et d'une première feuille de résine thermoplastique (9) dans une forme cylindrique pour former une portion de gaine (3) ;
(b) empilement d'une seconde feuille de résine thermoplastique (10) autour d'une périphérie externe de la portion de gaine (3) pour former une portion de formation de dent (12) ;
(c) chauffage et compression de la portion de gaine (3) et de la portion de formation de dent (12) ; et de
(d) formation de dents (6) dans une périphérie externe de la portion de formation de dent (12) pour former une portion de dent (4), sur quoi la portion de dent (4) est définie comme une région annulaire ne contenant pas de feuille de fibres de renforcement (5).

2. Procédé de fabrication selon la revendication 1, dans lequel
l'étape (d) est réalisée simultanément avec l'étape (c) en utilisant une forme de dent dans l'étape (c).

3. Procédé de fabrication selon la revendication 1, dans lequel
l'étape (d) comprend la découpe de la portion de formation de dent (12) après l'étape (c) pour former les dents (6).

4. Procédé de fabrication selon l'une quelconque des revendications 1 à 3, dans lequel
la première feuille de résine thermoplastique (9) contient une résine présentant une masse moléculaire moyenne en nombre de 25 000 ou inférieure, et
la seconde feuille de résine thermoplastique (10) contient une résine présentant une masse moléculaire moyenne en nombre supérieure à 25 000.

5. Procédé de fabrication selon l'une quelconque des revendications 1 à 4, dans lequel
la seconde feuille de résine thermoplastique (10) comprend une feuille contenant une charge.

6. Procédé de fabrication selon l'une quelconque des revendications 1 à 5, comprenant de plus l'étape de :
(e) division d'une structure cylindrique produite par l'étape (c) en pièces individuelles d'une dimension correspondant à un roulement individuel.

7. Roulement annulaire présentant un trou de passage dans son centre, comprenant :
une portion de gaine (3) qui est constituée d'une première résine thermoplastique (9) et qui contient une feuille de fibres de renforcement (5) empilée de sorte qu'une surface et l'autre surface de la feuille de fibres de renforcement (5) s'étendent dans une direction circonférentielle du trou de passage (2) et de sorte que plusieurs feuilles de fibres de renforcement (5) sont enroulées concentriquement, ou une seule feuille de fibres de renforcement (5) est enroulée en spirale ; et
une portion de dent (4), qui est constituée d'une seconde résine thermoplastique (10), est une région entourant la portion de gaine (3) et est définie comme une région annulaire ne contenant pas de feuille de fibres de renforcement (5), sur quoi la portion de dent en association avec la portion de gaine (3) forme une couche de résine continue, et qui présente des dents (6) formées dans sa périphérie externe.
